# EUROPEAN PATENT SPECIFICATION

(11) **EP 0 520 588 B1**
(45) Date of publication and mention of the grant of the patent: **31.01.1996**
(21) Application number: 92201915.3
(22) Date of filing: 26.06.1992
(51) Int. Cl.: B62D 33/06

(54) **A tilting device for a vehicle having a tiltable cab**
Kippvorrichtung für ein Fahrzeug mit kippbarer Kabine
Dispositif de basculement pour véhicule à cabine basculable

(30) Priority: 27.06.1991 NL 9101118
(43) Date of publication of application: 30.12.1992
(73) Proprietor: APPLIED POWER INC., Butler, Wisconsin 53007 (US)
(72) Inventor: Van Gaalen, Frederikus Alfonsus, NL-7596 LB Rossum (NL); Sonneborn, Lambertus Johannes, NL-7576 EM Oldenzaal (NL)
(74) Representative: Boelsma, Gerben Harm, Ir.

(56) References cited:
- FR-A- 2 239 376
- FR-A- 2 531 922
- PATENT ABSTRACTS OF JAPAN vol. 007, no. 203 (M-241)8 September 1983 & JP-A-58 101 877 ( HINO JIDOSHA KOGYO )
- PATENT ABSTRACTS OF JAPAN vol. 009, no. 242 (M-417)28 September 1985; & JP-A-60 094 876 (JIDOSHA KIKI)

## Description

The invention relates to a tilting device for a vehicle having a tiltable cab, comprising a piston cylinder device, one end of which is pivotally connected to the chassis of the vehicle, whereas its other end is connected with the cab through a guide arm positioned in a plane perpendicular to the tilting axis, said guide arm having an engagement portion, that cooperates with a complementarily shaped engagement portion on the cab, in such a way, that the two engagement portions are out of engagement and allow a certain lost motion of the guide arm relative to the cab when the latter is in its rest or driving position, but progressively enter into mutual engagement when the cab is tilted from such position, whereby the guide arm becomes fixed relative to the cabin.

Such a tilting device is disclosed in DE-A-33 14 404, with which the guide arm is formed by a solid link, having one end pivotally connected to the cabin and the other, forked end of which is pivotally connected to the piston rod end of the piston cylinder device.

A tilting device of this type has the advantage, that in the driving position of the cab - with the piston cylinder device being (substantially) in its retracted position - the lost motion of the guide arm allows the cab to slightly and resiliently move up and down without requiring the piston to perform corresponding up and down movements within the cylinder.

A disadvantage of the well-known device having a pivoting guide arm, however, is to be seen in the presence of two pivots, about which the guide arm is performing continuous swinging movements during riding, which pivots constitute friction and lubrication points, requiring frequent maintenance and may soon result in undue play with inherent rattling.

In accordance with the present invention this drawback is overcome in a simple and effective manner by a guide arm that is flexible in its plane.

By constructing the guide arm as proposed by the present invention, the ends of it may be rigidly, e.g. by clamping, connected to the cab and to the respective end of the piston cylinder device respectively, whereby the required swinging movements of the guide arm during driving are permitted by bending of the guide arm in its vertical plane perpendicular to the tilting axis of the cab.

Such a guide arm is essentially maintenance free and hardly influences the characteristics of the cab suspension.

In a practical embodiment the flexible guide arm is substantially constituted by a leaf spring. This leaf spring nay be rather weak so as to reduce its influence onto the cab suspension to a minimum.

The invention will be hereinafter further explained with reference to the drawing which shows a number of preferred embodiments.
Fig. 1 is a diagrammatic side elevation of a truck having a tiltable cab;
fig. 2A and 2B show a diagrammatic side view of the connection between the tilting device and the tiltable cabin according to a first embodiment, in the driving position (fig. 2A) and in the forwardly tilted position (fig. 2B) respectively;
fig. 3A-C show a modification of the connection shown in fig. 2A-B, in the driving position (fig. 3A) and two tilted positions (fig. 3B and fig. 3C) respectively and
fig. 4A-E show a third embodiment of the connection between the tiltable cabin and the tilting device, in the driving position (fig. 4A) and four successive stages during a tilting procedure respectively.

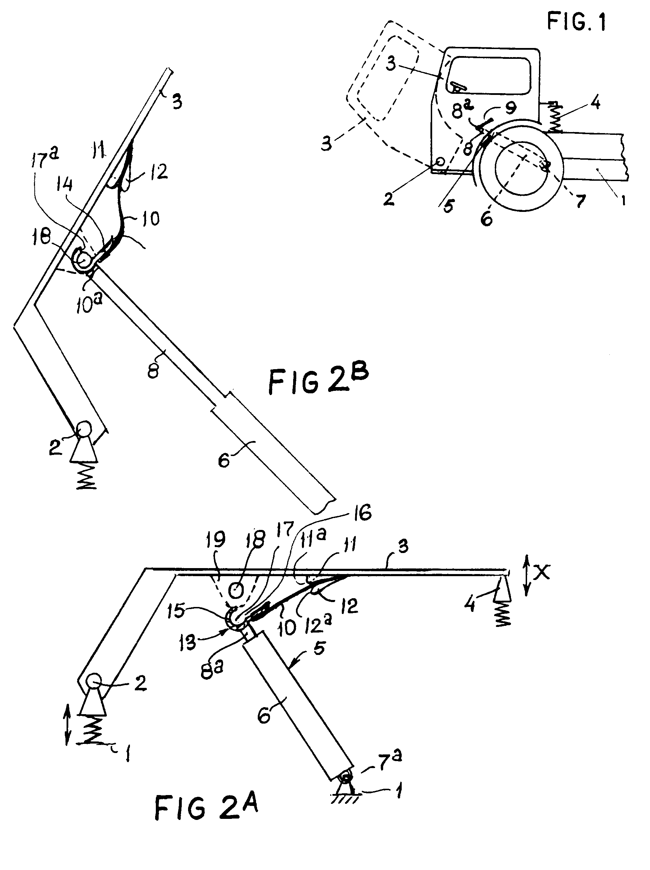

With reference to fig. 1, the truck shown diagramatically therein comprises a chassis 1 with a cab 3 mounted for a tilting movement about an axis 2 positioned at the front, said cab being normally supported - in its driving position - with its rearward end on a resilient support 4.

A tilting device 5 is provided to tilt the cab 3 forwardly from the driving position. This tilting device comprises a piston cylinder device, the cylinder 6 of which has (in the example shown) its lower end 6a pivotally connected to the chassis 1 at 7 and the piston rod 8 of which having its upper end 8a connected to the cab 3 by means of a guide arm 9.

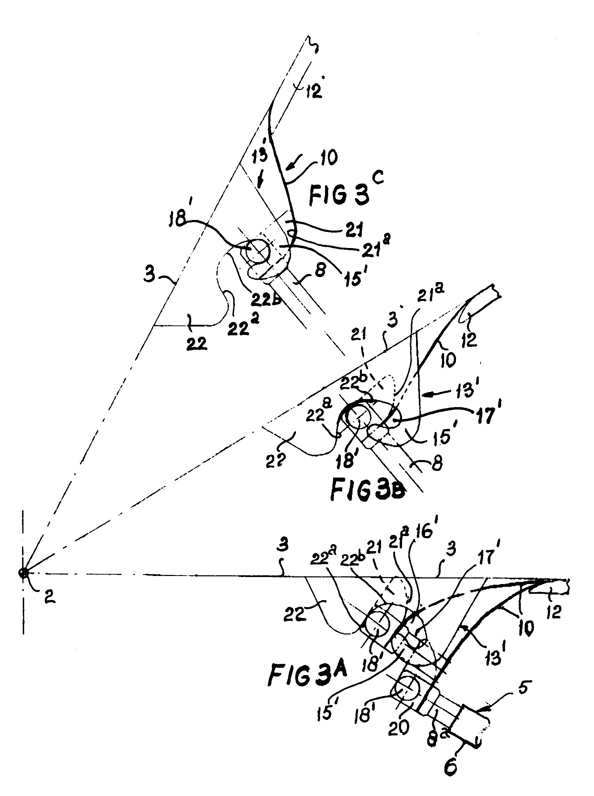

The connection between the cab 3 and the tilting device 5 will be hereinafter further described with reference to fig. 2, 3 and 4.

In the embodiment of fig. 2 the guide arm 9 is formed by a leaf spring 10, which is clamped at its right-hand end (vide the drawing) between a support plate 11 fastened to the lower side of the cab 3, and a cover plate 12. The end faces 11a and 12a of the support plate 11 and the cover plate 12 respectively are rounded.

The left hand end of the leaf spring 10 is fixedly attached to a rightwardly extending leg 14 of a hook-shaped engagement portion 13 connected to the free piston rod end 8a. The hook proper 15 of the engagement portion 13 has an opening 16 facing away from the tilting axis 2, and a receiving cavity 17. The receiving cavity 17 extends along a sector of a cylindrical surface and covers an arc which is slightly larger than 180°. During tilting of the cab the engagement portion 13 nay engage with its receiving cavity 17 about a pin 18 which is attached to the cab as by brackets 19.

Fig. 2a shows the connection in the driving position. The pin 18 and the hook-shaped engagement portion 13 are out of engagement and are positioned in spaced relationship one above the other, which permits the cab to spring up and down at the rearward end according to arrow X and possibly also at the front end side according to arrow Y, without the need for the piston rod to carry out corresponding retracting and extending movements relative to the cylinder 6. The up and down springy movements of the cab 3 involve reciprocating bending movements of the leaf spring 10 in the nip between the rounded end faces 11a and 12a of the support plate 11 and the cover plate 12.

If it is desired to tilt the cab 3 from the driving position of fig. 2A forwardly, the piston rod is hydraulically extended in the usual manner, whereby, in an initial stage, the engagement postion 13 is moving towards the pin 18 so as to engage the latter. It will be clear, that the upwardly facing edge 17a of the receiving cavity 17 has to be positioned such, that it can pass the pin 18 at the left hand side before the engagement portion 13 is actually engaging the pin 18. After the engagement between the engagement portion 13 and the pin 18 has taken place, the hook 15 of the engagement portion 13 will, while the cab is tilted further towards the position of fig. 2B- gradually close around the pin 18 as a result of the angular displacement of the longitudinal axis of the tilting device 5 relative to the tilting cab 3. This angular displacement also appears from the deformation of the leaf spring 10 at the end of the tilting movement (fig. 2B).

In the modification according to fig. 3 the engagement portion 18', which is to be compared with the pin 18 of fig. 2, is fastened to the free end 8a of the piston rod, whereas in this case a double hook-shaped engagement portion 13' is attached to the lower side of the cab 3. The leaf spring 10 is fastened to the cab 3 in a similar manner as described with reference to the embodiment of fig. 2, whereby said leaf spring has its left-hand end clamped between the free piston rod end 8a and a block 20 carrying the pin-shaped engagement portion 18'. The block 20 is provided with a rightwardly extending cam 21 having a cam surface 21a facing towards the leaf spring so as to cause the leaf spring 10 to conform to said cam when the cab is tilted.

The hook-shaped engagement portion 13' has its opening 16' facing obliquely upwardly and forwardly (to the left) and has also a guide cam portion 22 adapted to guide the pin-shaped engagement portion 18' towards the receiving cavity 17' of the hook 15'.

In fig. 3A, in which the cab 3 is shown in its rest position, the piston cylinder device 5 is shown in two positions. In the lower position the piston rod 8 is (substantially) retracted into the cylinder 6. This position corresponds with the position during driving. The pin-shaped engagement portion 18' is released and spaced from the hook 15' of the engagement portion 13' on the cab. This allows for a springy up and down movement of the cab in a similar manner as described hereinabove with reference to fig. 2, causing the leaf spring 10 to simultaneously bend in opposite directions, while the piston rod 8 is kept blocked in its retracted position within the cylinder 6.

In the second position the piston rod 8 has - to initiate a tilting movement of the cab 3 - extended from the cylinder 6 to the extent that the pin 18' has (with inherent bending of the leaf spring 10) come into contact with the first cam surface portion 22a of the guide cam 22. A continued extending movement of the piston rod 8 guides the pin 18' along the second cam surface portion 22b of the cam 22 towards the opening 16' of the receiving cavity 17' of the hook 15', while the cab is carrying out a tilting movement about the axis 2 (vide fig. 3B).

During the final stage of the tilting movement, from the position of fig. 3B to the fully extended piston rod position of fig. 3C, the leaf spring 10 is winding itself onto the cam surface 21a, which causes the pin 18' to be completely pulled into the receiving cavity 17' of the hook 15' and to be locked therein. Due to the leaf spring 10 being bent about the cam surface 21a the pin 18' is kept into the engagement position of fig. 3C so that the cab is secured against further forward tilting (under the action of the cab weight which in that position is active at a point in front of the tilting axis 2).

For a smooth guidance of the pin 18' along the cam surface portions 22a and 22b the pin 18' is preferably in the form of two rollers mounted on either side of the cam 22.

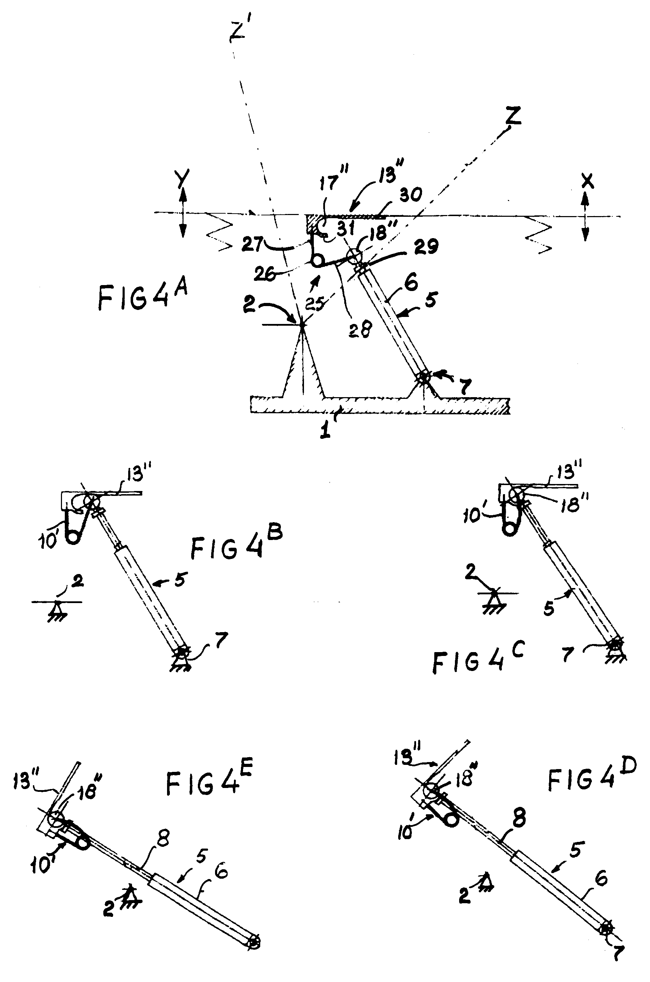

In the embodiment of fig. 4 the guide arm 10' is formed by two transversely spaced springs 25 of the hair pin type, each having two spring legs 27 and 28 with an interconnecting coil spring portion 26 therebetween. The spring legs 27 are a bit more solid and consequently have a greater stiffness than the spring legs 28.

In this case a pin 18'' having its axis extending parallel to the tilting axis 2 is provided at the free piston rod end, whereas a locking collar 29 is provided at a certain distance under the pin 18''. The two end portions of the pin 18'' may be formed by rollers.

In this case an engagement portion 13'' is attached to the cab 3, comprising a plate 30 having an integrally formed substantially semi-cylindrical receiving cavity 17'', the opening of which is facing to the right (as seen in the drawing and in particular in fig. 4A).

The free ends of the spring legs 27 of the two springs 25 (only one of which is shown in the drawing) are fastened into the plate 30 at a certain distance forwardly from the receiving cavity 17'' and with the spring legs 27 in a substantially vertical position. The free ends of the spring legs 28 are bent into a horizontal direction to extend through axial bores in the (roller) ends of the pin 18''.

Fig. 4A shows the cab in the driving position, with the tilting device 5 in the (substantially) fully retracted position, while the spring 25 is in its open and (substantially) untensioned position. The pin 18'' is taking a released position at a distance under the receiving cavity 17'', which allows for an up and down springy movement of the cab at the rear end along arrow X and possibly also at the front end according to arrow Y, involving a simultaneous opening and closing of the spring legs 27 and 28. In fig. 4A the gravity center of the cab is indicated at Z; at the end of a complete tilting movement this gravity center has arrived in the position Z' in front of the tilting axis 2.

Fig. 4B shows the tilting device 5 in a position, in which the piston rod 8 has extended to an extent, that the spacing between the pin 18'' and the receiving cavity 17'' (existing in the driving position of fig. 4A) has been bridged and the pin 18'', while causing the spring leg 28 to bend along, has come into contact with the lower side of the plate 30. The cab, however, is still in its horizontal position.

Upon further extending the piston rod from the position of fig. 4B towards that of fig. 4C the pin 18'' is moving forwardly (to the left in the drawing) along the lower side of the plate 30 and is finally received into the receiving cavity 17''. When the pin 18'' is moving into the receiving cavity an edge portion 31 delimiting said receiving cavity 17'' on the lower side is gradually moving into the space between the pin 18'' and the locking collar 29 thereunder.

In fact the position of fig. 4C is the starting position for the tilting movement proper.

In the position of fig. 4D the piston rod 8 is extended and the cab is tilted to such an extent, that the centre of gravity of the cab has become positioned vertically above the tilting axis 2.

In the situation of fig. 4E the tilting movement has been completed and the piston rod 8 is hydraulically blocked in the cylinder 6 of the tilting device 5. In this final position the center of gravity Z has become positioned in front of the tilting axis 2 so that the cab tends to tilt further in the forward direction under the influence of the cab weight. The pin 18'', however, is securely locked within the receiving cavity 17'' to prevent the cab from releasing itself from the piston rod.

For each of the embodiments described hereinabove it will be clear that when the cab is tilted back from the tilted position into the driving position by retracting the piston rod, the cooperating engagement portions 13, 18; 13', 18' and 13'', 18'' will be kept mutually engaged until the cab has returned into its horizontal position, i.e. with the cab resting on the resilient support 4 (fig. 1). The piston rod 8 is then moving into the fully retracted position, whereby the engagement portion at the free end of the piston rod will - assisted by the relaxing guide arm 10; 10'; become released from the engagement portion 13; 13'; 13''.

## Claims

1. A tilting device (5) for a vehicle having a tiltable cab, comprising a piston cylinder device (6, 8), one end (6a) of which is pivotally connected to the chassis (1) of the vehicle, whereas its other end (8a) is connected with the cab (3) through a guide arm (9; 10; 10') positioned in a plane perpendicular to the tilting axis (2), said guide arm (9; 10; 10') having an engagement portion (13, 15; 18'; 18''), that coperates with a complementarily shaped engagement portion (18; 13'; 13'') on the cab (3), in such a way, that the two engagement portions (13, 15; 18'; 18'' and 18; 13'; 13'') are out of engagement and allow a certain lost motion of the guide arm (9, 10; 10') relative to the cab (3) when the latter is in its rest or driving position, but progressively enter into mutual engagement when the cab (3) is tilted from such position, where the guide arm (9; 10; 10') becomes fixed relative to the cabin (3), characterized in that the guide arm (9; 10; 10') is flexible in its plane.

2. A tilting device (5) accords to claim 1, characterized in that the guide arm (9) is formed as a leaf spring (10).

3. A tilting device (5) according to claim 1-2, characterized in that the engagement portion (13, 15) at the end (8a) of the piston cylinder device (6, 8) has an arcuate receiving cavity (17), with its opening (16) facing away from the tilting axis (2), for a pin (18) which forms the complementary engagement portion on the cab (3).

4. A tilting device (5) according to claim 2, characterized in that the engagement portion (13, 15) comprising the arcuate receiving cavity (17) is formed by a solid plate having an arcuately curved end portion (15) connected to the free end of the leaf spring (10).

5. A tilting device (5) according to claim 2-4, characterized in that the leaf spring (10) is held between the cab (3) and a cover plate (12), wherein the cover plate (12) has a rounded end face (12a) on the side where the leaf spring is projecting, the rounded end face (12a) allowing for a rolling movement of the leaf spring (10) when bending.

6. A tilting device (5) according to claim 2, characterized in that the engagement portion (18') at the end (8a) of the piston cylinder device (6, 8) is formed as a pin (18'), whereas the complementary engagement portion (13') on the cab (3) has a hook-shaped portion (15'), the opening (16') of which is facing obliquely forwardly and upwardly, the latter engagement portion (13') having also a guide cam (22) positioned in front of the receiving cavity (17') and adapted to guide the pin-shaped engagement portion (18') on the free piston rod end (8a) towards the receiving cavity (17') in the hook-shaped portion (15').

7. A tilting device (5) according to claim 6, characterized in that the free piston rod end (8a) carrying the pin-shaped engagement portion (18') also comprises a cam (21) having a cam surface (21a) facing towards the leaf spring (10) and permitting the leaf spring (10) to wind upon said cam surface (21a).

8. A tilting device (5) according to claim 1, characterized in that the guide arm (10') is formed by two transversely spaced springs (10') of the hair-pin type, said springs having one leg substantially vertically fastened to the cab (3) or to a part of the engagement portion (13'') on the cab (3), whereas the other spring leg extends with a bent end portion into an axial bore of the pin-shaped engagement portion (18'') carried by the free piston rod end (8a), the engagement portion (13'') on the cab (3) being provided with a substantially semi-cylindrical receiving cavity (17'') for the pin-shaped engagement portion (18'') on the piston cylinder device (6, 8), said receiving cavity (17'') having its opening facing rearwardly.

## Patentansprüche

1. Kippvorrichtung (5) für ein Fahrzeug mit kippbarer Kabine, aufweisend eine Kolbenzylindervorrichtung (6,8), deren eines Ende (6a) drehbar mit dem Chassis (1) des Fahrzeugs verbunden ist, während ihr anderes Ende (8a) mit der Kabine (3) durch einen Führungsarm (9;10;10') verbunden ist, der in einer zur Kippachse (2) senkrechten Ebene positioniert ist, wobei besagter Führungsarm (9;10;10') einen Eingriffsabschnitt (13,15;18';18'') hat, der mit einem komplementär geformten Eingriffsabschnitt (18;13';13'') an der Kabine (3) auf eine solche Weise zusammenwirkt, daß die zwei Eingriffsabschnitte (13,15;18';18'' und 18;13';13'') außer Eingriff stehen und einen gewissen toten Gang des Führungsarms (9,10;10') relativ zur Kabine (3) erlauben, wenn die letztere in ihrer Auflage- oder Fahrtposition ist, jedoch schrittweise in wechselseitigen Eingriff eintreten, wenn die Kabine (3) aus einer solchen Position gekippt wird, wodurch der Führungsarm (9;10;10') relativ zur Kabine (3) festgestellt wird, dadurch gekennzeichnet, daß der Führungsarm (9;10;10') in seiner Ebene flexibel ist.

2. Kippvorrichtung (5) nach Anspruch 1, dadurch gekennzeichnet, daß der Führungsarm (9) als eine Blattfeder (10) ausgebildet ist.

3. Kippvorrichtung (5) nach Anspruch 1-2, dadurch gekennzeichnet, daß der Eingriffsabschnitt (13,15) am Ende (8a) der Kolbenzylindervorrichtung (6,8) eine gewölbte Aufnahmevertiefung (17) hat, deren Öffnung (16) von der Kippachse (2) abgekehrt ist, für einen Stift (18), der den komplementären Eingriffsabschnitt an der Kabine (3) bildet.

4. Kippvorrichtung (5) nach Anspruch 2, dadurch gekennzeichnet, daß der die gewölbte Aufnahmevertiefung (17) aufweisende Eingriffsabschnitt (13,15) durch eine massive Platte mit einem gewölbt gekrümmten Endabschnitt (15) gebildet wird, der mit dem freien Ende der Blattfeder (10) verbunden ist.

5. Kippvorrichtung (5) nach Anspruch 2-4, dadurch gekennzeichnet, daß die Blattfeder (10) zwischen der Kabine (3) und einer Abdeckplatte (12) gehalten wird, wobei die Abdeckplatte (12) eine abgerundete Endfläche (12a) auf der Seite hat, auf der die Blattfeder vorspringt, wobei die abgerundete Endfläche (12a) eine rollende Bewegung der Blattfeder (10) bei Biegebeanspruchung erlaubt.

6. Kippvorrichtung (5) nach Anspruch 2, dadurch gekennzeichnet, daß der Eingriffsabschnitt (18') am Ende (8a) der Kolbenzylindervorrichtung (6,8) als ein Stift (18') ausgebildet ist, während der komplementäre Eingriffsabschnitt (13') an der Kabine (3) einen hakenförmigen Abschnitt (15') hat, dessen Öffnung (16') schräglaufend nach vorne und nach oben liegt, wobei der letztere Eingriffsabschnitt (13') auch einen Führungsnocken (22) hat, der vor der Aufnahmevertiefung (17') positioniert und dafür ausgelegt ist, den stiftförmigen Eingriffsabschnitt (18') am freien Kolbenstangenende (8a) in Richtung der Aufnahmevertiefung (17') im hakenförmigen Abschnitt (15') zu führen.

7. Kippvorrichtung (5) nach Anspruch 6, dadurch gekennzeichnet, daß das den stiftförmigen Eingriffsabschnitt (18') tragende freie Kolbenstangenende (8a) auch einen Nocken (21) mit einer Nockenfläche (21a) aufweist, die der Blattfeder (10) zugewandt ist und der Blattfeder (10) erlaubt, sich um besagte Nockenfläche (21a) zu winden.

8. Kippvorrichtung (5) nach Anspruch 1, dadurch gekennzeichnet, daß der Führungsarm (10') durch zwei transversal beabstandete Federn (10') vom Haarnadeltyp gebildet wird, wobei besagte Federn ein Bein im wesentlichen vertikal an der Kabine (3) oder an einem Teil des Eingriffsabschnitts (13'') an der Kabine (3) befestigt haben, während das andere Federbein sich mit einem gebogenen Endabschnitt in eine axiale Bohrung des stiftförmigen Eingriffsabschnitts (18'') erstreckt, der durch das freie Kolbenstangenende (8a) getragen wird, wobei der Eingriffsabschnitt (13'') an der Kabine (3) mit einer im wesentlichen halbzylindrischen Aufnahmevertiefung (17'') für den stiftförmigen Eingriffsabschnitt (18'') an der Kolbenzylindervorrichtung (6,8) versehen ist, wobei besagte Aufnahmevertiefung (17'') ihre Öffnung zur Rückseite gekehrt hat.

## Revendications

1. Dispositif de basculement (5) pour véhicule ayant une cabine basculante, comprenant un dispositif (6, 8) à piston et cylindre dont une première extrémité (6a) est articulée au châssis (1) du véhicule, tandis que son autre extrémité (8a) est reliée à la cabine (3) par un bras de guidage (9; 10; 10') disposé dans un plan perpendiculaire à l'axe de basculement (2), ledit bras de guidage (9; 10; 10') ayant une partie d'enclenchement (13, 15; 18';18''), qui coopère avec une partie d'enclenchement (18; 13'; 13'') de forme complémentaire située sur la cabine (3), de telle manière que les deux parties d'enclenchement (13, 15; 18'; 18'' et 18; 13; 13'') ne soient pas enclenchées et permettent un certain mouvement à vide du bras de guidage (9, 10; 10') par rapport à la cabine (3) lorsque cette dernière est dans sa position de repos ou de conduite, mais s'enclenchent progressivement l'une avec l'autre lors du basculement de la cabine (3) à partir de cette position, grâce à quoi le bras de guidage (9; 10; 10') vient en position fixe par rapport à la cabine (3), caractérisé en ce que le bras de guidage (9; 10; 10') est souple dans son plan.

2. Dispositif de basculement (5) selon la revendication 1, caractérisé en ce que le bras de guidage (9) se présente sous la forme d'un ressort à lames (10).

3. Dispositif de basculement (5) selon les revendications 1 et 2, caractérisé en ce que la partie d'enclenchement (13, 15) à l'extrémité (8a) du dispositif (6, 8) à piston et cylindre comporte une cavité réceptrice arquée (17), dont l'ouverture (16) est orientée à l'opposé de l'axe de basculement (2), pour une broche (18) qui constitue la partie complémentaire d'enclenchement située sur la cabine (3).

4. Dispositif de basculement (5) selon la revendication 2, caractérisé en ce que la partie d'enclenchement (13, 15) comportant la cavité réceptrice arquée (17) est constituée par une plaque pleine ayant une extrémité (15) incurvée de manière arquée et reliée à l'extrémité libre du ressort à lames (10).

5. Dispositif de basculement (5) selon les revendications 2 à 4, caractérisé en ce que le ressort à lames (10) est retenu entre la cabine (3) et une plaque de fermeture (12), la plaque de fermeture (12) ayant une face d'extrémité arrondie (12a) du côté où dépasse le ressort à lames, la face d'extrémité arrondie (12a) permettant un mouvement roulant du ressort à lames (10) lorsqu'il subit une flexion.

6. Dispositif de basculement (5) selon la revendication 2, caractérisé en ce que la partie d'enclenchement (18') à l'extrémité (8a) du dispositif (6, 8) à piston et cylindre se présente sous la forme d'une broche (18'), tandis que la partie complémentaire d'enclenchement (13') présente sur la cabine (3) comporte une partie (15') en forme de crochet dont l'ouverture (16') est orientée de manière oblique vers l'avant et vers le haut, ladite partie d'enclenchement (13') comportant aussi une came de guidage (22) placée en face de la cavité réceptrice (17') et apte à guider la partie d'enclenchement (18') en forme de broche située à l'extrémité libre (8a) de la tige de piston vers la cavité réceptrice (17') présente dans la partie (15') en forme de crochet.

7. Dispositif de basculement (5) selon la revendication 6, caractérisé en ce que l'extrémité libre (8a) de la tige de piston portant la partie d'enclenchement (18') en forme de broche comporte aussi une came (21) ayant une surface de guidage (21a) orientée vers le ressort à lames (10) et permettant au ressort à lames (10) de s'enrouler sur ladite surface de guidage (21a).

8. Dispositif de basculement (5) selon la revendication 1, caractérisé en ce que le bras de guidage (10') est constitué par deux ressorts (10') du type en épingle espacés transversalement, lesdits ressorts ayant une première branche fixée de manière sensiblement verticale à la cabine (3) ou à une région de la partie d'enclenchement (13'') située sur la cabine (3), tandis que l'autre branche des ressorts s'étend avec une extrémité coudée jusque dans un alésage axial de la partie d'enclenchement (18'') en forme de broche portée par l'extrémité libre (8a) de la tige de piston, la partie d'enclenchement (13'') située sur la cabine (3) étant pourvue d'une cavité réceptrice sensiblement semi-cylindrique (17'') pour la partie d'enclenchement (18'') en forme de broche située sur le dispositif (6, 8) à piston et cylindre, l'ouverture de ladite cavité réceptrice (17'') étant orientée vers l'arrière.
